# EUROPEAN PATENT SPECIFICATION

(11) **EP 0 695 120 B1**
(45) Date of publication and mention of the grant of the patent: **10.12.1997**
(21) Application number: 93911539.0
(22) Date of filing: 19.04.1993
(51) Int. Cl.: A01J 7/00, A01J 7/02

(54) **METERING APPARATUS, AUTOMATIC CLEANING DEVICE AND MILKING PLANT EQUIPPED WITH SUCH AN APPARATUS AND USE OF SUCH AN APPARATUS FOR CLEANING A LIQUID-CARRYING PLANT**
DOSIERVORRICHTUNG, AUTOMATISCHE REINIGUNGSEINRICHTUNG UND DAMIT AUSGERÜSTETE MELKANLAGE, UND ANWENDUNG DIESER VORRICHTUNG ZUR REINIGUNG EINER FLÜSSIGKEITSANLAGE
APPAREIL DE MESURE, DISPOSITIF DE NETTOYAGE AUTOMATIQUE ET EQUIPEMENT DE TRAITE EQUIPE D'UN TEL APPAREIL ET UTILISATION D'UN TEL APPAREIL POUR NETTOYER UNE INSTALLATION CONTENANT UN LIQUIDE

(43) Date of publication of application: 07.02.1996
(73) Proprietor: ALFA-LAVAL AGRI B.V., 9700 GA Groningen (NL)
(72) Inventor: VERSTEIJNEN, Carolus Marinus Bernard, NL-9753 JD Haren (NL)
(74) Representative: Smulders, Theodorus A.H.J., Ir.
(86) International application number: NL9300083
(87) International publication number: WO9423564

(56) References cited:
- EP-A- 0 127 271
- WO-A-91/07083
- FR-A- 2 342 798
- US-A- 3 190 503

## Description

This invention relates to a milking plant as defined in the preamble of Claim 1. Such a plant is known from EP-A-0 127 271.

An apparatus for delivering a given volume of liquid, comprising a reservoir for receiving the amount of liquid to be delivered and a delivery channel, connecting to the reservoir, for delivering liquid from the reservoir is known as part of an automatic cleaning device of applicant, commercially available under the type designation Alwa 1700. This automatic cleaning device is particularly suitable for controlling the cleaning and disinfection of a system for milking cattle and comprises, in addition to the above-mentioned apparatus, means for controlling the course of the cleaning and the disinfection of a system for milking cattle. Such automatic devices are also used for cleaning storage systems for milk, which are often used in combination with a system for milking cattle.

In the known system, the reservoir is included in a water supply line. Stored in the automatic cleaning device is a program providing *inter alia* for the supply of water through the water supply line in which the reservoir is included.

The volume of cleaning or disinfecting liquid to be supplied must be poured into the reservoir before the relevant program is started. This is a relatively laborious operation which must be carried out twice or three times a day. In addition, the storage containers with the liquids to be delivered have a weight that is difficult to lift when they are still full. Moreover, spill and spattering of the concentrated cleaning and disinfecting liquids constitute safety hazards and the accurate metering of liquids requires particular attention.

A further drawback is that if the apparatus is connected to the general water mains, special provisions must be made to prevent cleaning or disinfecting liquid from entering the water mains, for instance as a result of a disaster.

The object of the invention is to provide an apparatus for delivering liquid, that does not have the above-mentioned drawbacks.

According to the present invention there is provided a milking plant as defined in Claim 1 and a method of use of such a plant, as defined in Claim 8.

The supply channel must be connected to a storage container with liquid to be delivered. Before liquid is introduced into the reservoir, the shut-off valve of the delivery channel must be closed so as to ensure that the liquid supplied remains in the reservoir. When the suction duct has been connected to the source of vacuum, liquid to be delivered can be drawn from the storage container by evacuating air from the reservoir, so that the reservoir is filled. When the liquid has attained a given level in the reservoir, the evacuation of air from the reservoir is stopped through the operation of the detector. Subsequently, or after excess liquid has flown back into the storage container, the valve of the delivery channel is operated, so that liquid is delivered from the cup via the delivery channel. The delivery of the liquid occurs at the time when such is required for the cleaning of the system. This may occur at a time well after the liquid has been drawn into the reservoir.

As liquid flows out of the reservoir, air flows into the reservoir through the air hole. After the delivery of liquid via the delivery channel has been completed, the valve of the delivery channel can be closed again and the apparatus is ready for drawing liquid into the reservoir again by resuming the evacuation of air through the suction duct.

The liquid is sucked from a storage container by the apparatus itself, so that it is no longer necessary to pour liquid from the storage container into the reservoir. It is sufficient to connect the supply channel to the storage container, which can for instance be effected by simply hanging a hose in the storage container.

By drawing liquid until a given level in the reservoir has been attained, or by allowing liquid to flow back until a given level has been attained, an exact predetermined amount of liquid can be collected in the reservoir prior to the delivery of liquid via the delivery channel.

The milking plant is equipped with a vacuum pump. To this pump the suction duct is connected. At least during milking, which precedes cleaning and disinfection, the vacuum pump is in operation and use can be made of the vacuum created by this pump so as to draw liquid from the storage container. When sufficient liquid has been supplied, suction can be stopped by shutting off the suction duct.

The delivery of liquid can occur independently of the supply of water, i.e., without water rinse. This makes it possible to deliver the liquid to the system to be cleaned without admixing water. If this system is separate from the water mains, it is possible to use water from the mains for the supply of water to the system without special provisions being necessary to prevent liquid that originates from apparatus connected to the mains from entering the water mains.

The means for stopping suction through the suction duct by means of the float is a shut-off valve which, in a lower position thereof, leaves the suction duct clear and, in an upper position thereof, shuts off the suction duct, whilst the float and the shut-off valve are movable along paths that coincide at least partly and the float is located under the shut-off valve. When the liquid level attains a given level, the float presses the shut-off valve against a passage of the suction duct, so that it is closed.

The means for stopping suction through the suction duct are designed as a shut-off valve and this valve can be maintained, by means of a vacuum created in the suction duct during operation, in a position wherein it shuts off the suction duct. As a result, the shut-off valve, after it has been closed, will remain closed as long as a sufficient degree of vacuum prevails in the suction duct. This prevents the shut-off valve from opening again in reaction to the decreasing liquid level in the reservoir as the liquid is being drained from the reservoir to be delivered via the delivery channel or to be returned to the storage container as excess liquid, as a result of which the suction of liquid would be resumed. Thus, it is possible to drain liquid from the reservoir regardless of whether the vacuum in the suction duct is maintained.

To open the shut-off valve of the suction duct, it is sufficient to allow the vacuum in the suction duct to drop out while the liquid level is below the level where it causes the closure of the shut-off valve of the suction duct.

As described, the liquid level can be dosed on the basis of the level in the reservoir at which the suction of liquid is stopped, or by allowing liquid, after suction has been stopped, to flow back into the storage container until a given liquid level has been attained. The inventive apparatus is especially suitable for this last manner of dosing, the float and shut-off valve being designed for stopping suction through the suction duct when the liquid in the reservoir attains a level that is located above the level at which the supply channel communicates with the reservoir. After the suction of liquid has been discontinued, liquid will drain through the supply channel until the liquid level has attained the level at which the supply channel communicates with the reservoir. The liquid volume to be delivered can be determined simply and accurately by arranging for the supply channel to communicate with the reservoir at a corresponding level.

The level at which the supply channel communicates with the reservoir can be determined in a particularly simple manner if this supply channel terminates in the reservoir via a duct projecting upwardly into the reservoir. The level of the end of the duct can simply be adapted by bending the duct or by cutting it off.

A particularly simple, accurate and permanently variable adjustability of the level at which the supply channel communicates with the reservoir is accomplished if moreover the distance over which the duct projects into the reservoir is adjustable.

The air hole preferably has a limited cross-sectional area. Thus, it can remain open during the suction of liquid without such an amount of air flowing into the reservoir that the suction of liquid is prevented. Means for closing the air hole can accordingly be omitted.

If the reservoir is transparent, it can be simply determined whether the intended volume of liquid is available. Since the reservoir should be filled for each cleaning operation, a brief glance at the reservoir before starting the cleaning operation is sufficient to ensure delivery of the intended volume of liquid.

According to an alternative embodiment of the invention, a sensor is arranged in the reservoir, capable of signaling to the automatic cleaning device whether sufficient liquid is present in the reservoir. Depending on this signal, an alarm, for instance, can be operated or the operation of the automatic cleaning device can be blocked.

The reservoir preferably comprises a cup and a lid, the lid being designed as an adapter which can be connected to a connection of an automatic cleaning device. Thus, the application of the present invention to an existing automatic cleaning device requires only limited adaptations.

According to a particularly advantageous embodiment of the invention, the shut-off valve of the delivery channel is coupled to a temperature sensor, for opening the shut-off valve when water in a system to be cleaned has attained a given minimum temperature.

Hereinafter the invention will be further explained on the basis of a most preferred exemplary embodiment with reference to the accompanying drawings, in which:
Fig. 1 is a sectional side elevation of an apparatus according to the invention, and
Fig. 2 is a front view of an automatic cleaning device for a system for milking cattle, including two apparatuses according to Fig. 1.

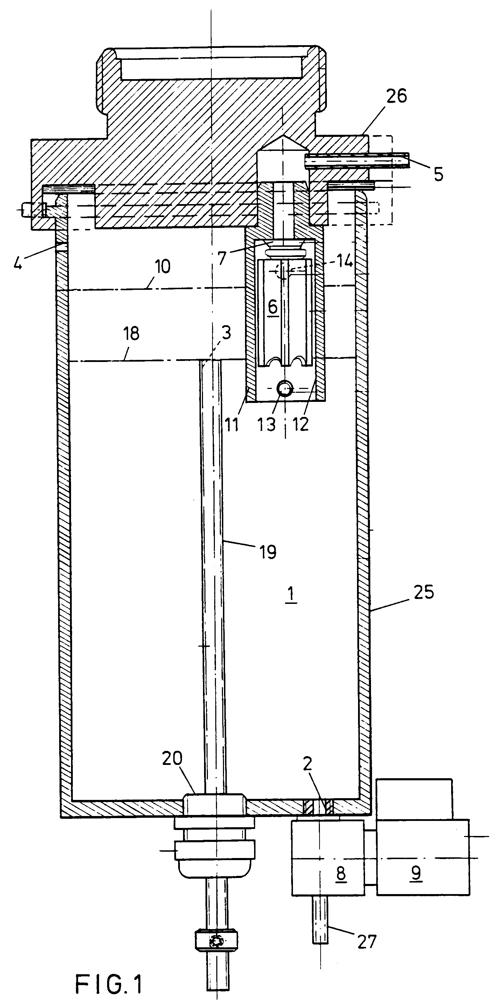

The apparatus shown in Fig. 1 comprises a reservoir 1 for receiving the amount of liquid to be delivered. Connecting to the reservoir are a delivery channel 2 for delivering liquid from the reservoir 1, a supply channel 3, an air hole 4 and a suction duct 5 to be connected to a source of vacuum. The supply channel 3, the air hole 4 and the suction duct 5 are each connected to the reservoir 1 at a distance above the delivery channel. Disposed in the reservoir 1 are a liquid level detector in the form of a float 6 and means, operable by the float 6, for stopping suction through the suction duct 5. These means are designed as a shut-off valve 7 capable of closing the mouth of the suction duct 5 in the reservoir 1. The delivery channel comprises a shut-off valve 8, which is operable by an electromagnetic operating unit 9.

The float 6 is shown in an upper position, wherein it presses the shut-off valve 7 against the mouth of the suction duct 5. The float 6 can be moved downwards within a floater mount 11 comprising a float chamber 12, from the position shown until it abuts a stop 13. The shut-off valve 7 is fixedly connected to the float 6. Owing to the fact that a float has a small weight, it requires only a relatively small degree of vacuum to maintain the shut-off valve 7 with the float 6 in a position wherein it is drawn against the mouth of the suction duct 5.

The shut-off valve may optionally be provided with a guide rod, extending in a guide opening in the float, so that the shut-off valve 7 and the float 6 can be moved relatively to each other. Thus, only the shut-off valve needs to be kept drawn to the mouth of the suction duct, so that an even lesser degree of vacuum will suffice.

The float mount 11 comprises an air hole 14 so that liquid can rise into the float chamber 12 regardless of the position of the shut-off valve 7 and to prevent liquid from being drawn into the suction duct 5 via the float chamber 12.

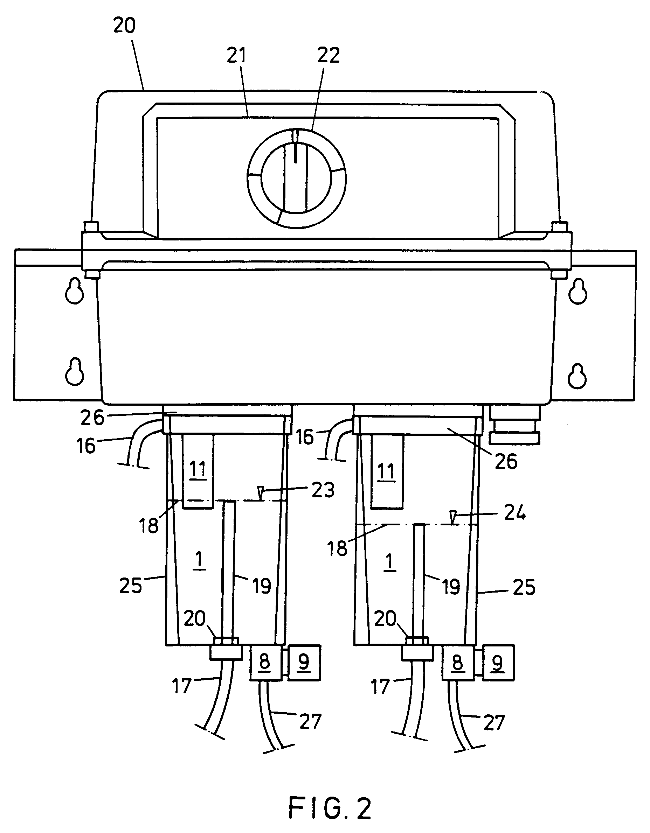

Prior to setting the apparatus into operation, the suction duct 5 is connected to a source of vacuum, for instance via a hose 16 (Fig. 2). The supply channel 3 is connected to a storage container (not shown) containing the liquid to be delivered, for instance by means of a hose 17 (Fig. 2). The supply channel 2 is connected to the system to which the liquid is to be delivered, for instance via a duct 27, which terminates in a rinsing tub (not shown) which functions as a buffer reservoir. The operating unit 9, finally, is connected to a power source via a switch in order to enable it to be activated to allow passage of liquid through the delivery channel 2.

When the apparatus according to the embodiment shown is set into operation, the float 6 is supported by the stop 13 and the shut-off valve 7 in turn is supported by the float 6. The shut-off valve 8 of the delivery channel should be closed. Next, via the suction duct 5, air is sucked from the reservoir 1 by the source of vacuum to which the suction duct is connected, so that a partial vacuum is applied to the reservoir 1. As a result of this partial vacuum, liquid is drawn from the storage container into the reservoir 1.

The air hole is of such small dimensions that in spite of the air flowing in through this hole 4, a sufficiently reduced pressure can be built up for liquid to be sucked from the storage container. Naturally, when positioning the storage container, a given maximum difference in height relative to the reservoir should be taken into account. The liquid level in the storage container, when filled, should be lower than the level where the supply channel 3 communicates with the reservoir 1.

When in the reservoir 1 a liquid level as indicated by the chain-dotted line 10 is attained, the float 6 reaches the position shown in Fig. 1 and the suction duct 5 is closed. Through the air hole 4, air continues to flow into the reservoir 1, so that the reduced pressure in the reservoir 1 drops out gradually. As a result, the liquid will flow out through the supply channel 3 until the liquid level has fallen to a level (chain-dotted line 18) where the supply channel 3 communicates with the reservoir 1.

As the liquid level falls, the shut-off valve 7 continues to shut off the suction duct 5 as long as a reduced pressure prevails in the suction duct 5, thus preventing the suction of liquid being resumed while the liquid level is falling. If the reduced pressure in the suction duct 5 drops away, the float 6 with the shut-off valve 7 will fall back against the stop 13 and clear the suction duct 5. Now, of course, in the absence of a reduced pressure, the suction of liquid is not renewed. If a reduced pressure arises again between the suction of a volume of liquid and the delivery of that volume of liquid, for instance because the vacuum pump is activated for creating a vacuum elsewhere, the liquid level in the reservoir 1 will rise again to the level indicated by the chain-dotted line 10 and fall to the level indicated by the chain-dotted line 18. Thus, the liquid level will invariably return to the intended level.

An accurately metered volume of liquid to be delivered has now been collected in the reservoir 1. Owing to the fact that the supply channel 3 extends through a standpipe 19 projecting upwards into the reservoir 1, which standpipe can be moved through a seal 20, it is simple to set and adjust the level at which the supply channel 3 communicates with the reservoir 1, and hence the volume of liquid delivered per cycle.

For delivering the collected volume of liquid at the desired time, it is sufficient to operate the operating unit 9 so as to open the shut-off valve 8 in the delivery channel 2. As the liquid flows out through the delivery channel 2, air will flow into the reservoir 1 again through the air hole 4.

Fig. 2 shows how two apparatuses as shown in Fig. 1 can be used in an automatic cleaning device otherwise adapted only with regard to software. The automatic cleaning device has a housing 20 with an operating panel 21 and an operating knob 22. In the known automatic cleaning device, liquid is metered by pouring it into a reservoir, attaching the reservoir to the automatic cleaning device and subsequently passing water to be supplied to the system to be treated, through the reservoir at an appropriate time, so that it carries the liquid along. The liquid is thus introduced into an apparatus connected to a water mains, so that it is necessary to take measures so as to prevent liquid from entering the water mains.

When using the apparatus according to the invention, the water to be supplied to the system to be treated passes by the reservoir, direct to the system to be treated. This can for instance be effected by allowing the water to flow into a rinsing tub included in a circuit of the system to be treated. Thus, the system to be treated is always uncoupled from the water mains system. The liquid to be delivered can also be supplied direct to the system to be treated, for instance by causing it to run into the above-mentioned rinsing tub as well. Thus, the liquid to be delivered enters exclusively apparatuses and systems uncoupled from the water mains. As a consequence, for connecting to the water mains system an automatic cleaning device of which the means for delivering the liquid are designed as apparatuses according to the present invention, provisions for preventing entry of the water mains system by liquid from connected apparatuses can be omitted.

The reservoir 1 of the apparatus according to the embodiment shown comprises a cup 25 and a lid 26 adapted for cooperation with a holder of an automatic cleaning device as shown in Fig. 2. When the apparatus according to the present embodiment is attached to a mounting of an automatic cleaning device, supply apertures and discharge apertures for water, which, in the known automatic cleaning device, are designed for passing water through reservoir 1, are connected to each other, so that the water is passed on the side of the lid 26 remote from the cup 25 and is passed direct to the system to be treated.

Of course, for connection to an automatic cleaning device of a different type, a correspondingly adapted version of the lid 26 can be provided and the metering apparatus according to the invention can also be arranged detached from the automatic cleaning device connected therewith.

The reservoirs 1 of the automatic cleaning device according to Fig. 2 are of transparent design, so that it is easy to check whether the volumes of liquids necessary for cleaning and disinfection have been collected in the reservoirs. Checking the liquid level is further facilitated in that marks 23 and 24 have been provided on the wall of the reservoirs, indicating the proper liquid levels.

The automatic cleaning device according to Fig. 2 contains software that only needs to be adapted for briefly operating the operating units 9 of the respective apparatuses at the beginning of the circulation cleaning and the disinfection. The apparatuses are replenished automatically in that the source of vacuum in the existing program is switched off at least before milking and switched on at the beginning of milking in each cycle.

## Claims

1. A milking plant equipped with an automatic cleaning device comprising an apparatus for delivering a given volume of liquid, said apparatus comprising:
a reservoir (1) for receiving the amount of liquid to be delivered;
a delivery channel (2) connecting to the reservoir (1) for delivering liquid from the reservoir (1);
a vacuum pump;
a supply channel (3);
an air hole (4);
a suction duct (5) connected to the vacuum pump;
a float (6);
a shut-off valve (7) operable by the float (6) for stopping suction through the suction duct (5), which shut-off valve (7), in a lower position thereof, leaves the suction duct (5) clear and, in an upper position thereof, shuts off the suction duct (5), whilst the float (6) and the shut-off valve (7) are movable along paths coinciding at least partly; and
a shut-off valve (8) in the delivery channel (2);
whilst the supply channel (3), the air hole (4) and the suction duct (5) each communicate with the reservoir at a higher level than the delivery channel (2);
**characterized in that**
the shut-off valve (7) for stopping suction through the suction duct (5) is designed to be maintained in a position wherein it shuts off the suction duct (5) by means of a vacuum created in the suction duct (5) during operation, and in that
the suction duct (5) is in open communication with the vacuum source, such that a reduced pressure in the suction duct (5) arises when the vacuum pump is activated for creating a vacuum elsewhere.

2. A plant according to claim 1, characterized in that the liquid level detector (6) is designed for stopping suction through the suction duct (5) when the liquid in the reservoir attains a level (10) that is located above the level (18) at which the supply channel (3) communicates with the reservoir.

3. A plant according to claim 1 or 2, characterized in that the supply channel (3) terminates in the reservoir (1) via a duct (19) projecting upwardly into the reservoir (1).

4. A plant according to claim 3, characterized in that the distance over which the duct (19) projects into the reservoir (1) is adjustable.

5. A plant according to any one of the preceding claims, characterized in that the air hole (4) has a limited cross-sectional area.

6. A plant according to any one of the preceding claims, characterized in that the reservoir (1) comprises a cup (25) and a lid (26), the lid (26) being designed as an adapter connected to a mounting of the automatic cleaning device.

7. A plant according to any one of the preceding claims, characterized in that in the reservoir (1) a detector is arranged for signalling whether a given amount of liquid is present in the reservoir.

8. Use of a plant according to any one of the preceding claims, wherein, during a milking cycle:
the vacuum pump is activated at least once;
subsequently liquid is sucked up from a storage container into the reservoir while the shut-off valve (7) in the suction duct (5) is open, the shut-off valve (8) in the delivery channel (2) is closed and the vacuum pump is in operation;
subsequently the shut-off valve (7) in the suction duct (5) is closed when liquid sucked into the reservoir attains a given level and remains closed until the source of vacuum has been deactivated; and
wherein during a cleaning cycle liquid sucked into the reservoir during the milking cycle is delivered by opening the shut-off valve (8) in the delivery channel (2).

9. Use according to claim 8, characterized in that the liquid delivered is a cleaning agent, which is mixed with water and, with the resultant mixture, liquid-carrying channels of the plant are cleaned.

## Patentansprüche

1. Melkanlage, die mit einer automatischen Reinigungsvorrichtung ausgerüstet ist, die ein Gerät enthält, um eine bestimmte Menge an Flüssigkeit zu liefern, wobei das Gerät aufweist:
einen Behälter (1) zur Aufnahme der Menge an zu liefernder Flüssigkeit;
einen Ablaßkanal (2), der mit dem Behälter (1) verbunden ist, um aus dem Behälter (1) Flüssigkeit zu liefern;
eine Vakuumpumpe;
einen Zuführkanal (3);
ein Luftloch (4);
eine Saugleitung (5), die mit der Vakuumpumpe verbunden ist;
einen Schwimmer (6);
ein Sperrventil (7), das durch den Schwimmer (6) betätigt wird, um das Saugen durch die Saugleitung (5) zu unterbrechen, wobei das Sperrventil (7) in seiner unteren Position die Saugleitung (5) offenläßt und in seiner oberen Position die Saugleitung (5) verschließt, wobei der Schwimmer (6) und das Sperrventil (7) entlang von Wegen bewegbar sind, die zumindest teilweise zusammenfallen; und
ein Sperrventil (8) in dem Ablaßkanal (2);
wobei der Zuführkanal (3), das Luftloch (4) und die Saugleitung (5) jeweils an einer höheren Stelle mit dem Behälter in Verbindung stehen als der Ablaßkanal (2);
**dadurch gekennzeichnet, daß**
das Sperrventil (7) zur Unterbrechung des Saugens durch die Saugleitung (5) dazu ausgestaltet ist, um in einer Position zu bleiben, in der es die Saugleitung (5) verschließt, und zwar mittels eines Vakuums, das während des Betriebs in der Saugleitung (5) erzeugt wird, und daß
die Saugleitung (5) in offener Verbindung mit der Vakuumquelle steht, so daß ein verminderter Druck in der Saugleitung (5) entsteht, wenn die Vakuumpumpe aktiviert wird, um woanders ein Vakuum zu erzeugen.

2. Anlage nach Anspruch 1, dadurch gekennzeichnet, daß der Flüssigkeitspegeldetektor (6) dazu ausgestaltet ist, das Saugen durch die Saugleitung (5) zu unterbrechen, wenn die Flüssigkeit in dem Behälter einen Pegel (10) erreicht, der über dem Pegel (18) liegt, bei dem der Zuführkanal (3) mit dem Behälter in Verbindung steht.

3. Anlage nach Anspruch 1 oder 2, dadurch gekennzeichnet, daß der Zuführkanal (3) über eine sich nach oben gerichtet in den Behälter (1) erstreckende Leitung (19) in dem Behälter (1) endet.

4. Anlage nach Anspruch 3, dadurch gekennzeichnet, daß die Länge, mit der sich die Leitung (19) in den Behälter (1) erstreckt, einstellbar ist.

5. Anlage nach einem der vorhergehenden Ansprüche, dadurch gekennzeichnet, daß das Luftloch (4) eine begrenzte Querschnittsfläche hat.

6. Anlage nach einem der vorhergehenden Ansprüche, dadurch gekennzeichnet, daß der Behälter (1) ein becherförmiges Gefäß (25) und einen Deckel (26) hat, wobei der Deckel (26) als ein Adapter ausgestaltet ist, der an einem Rahmengestell der automatischen Reinigungsvorrichtung angebracht ist.

7. Anlage nach einem der vorhergehenden Ansprüche, dadurch gekennzeichnet, daß in dem Behälter (1) ein Detektor vorgesehen ist, um signalisieren, ob sich in dem Behälter eine bestimmte Menge an Flüssigkeit befindet.

8. Verwendung einer Anlage nach einem der vorhergehenden Ansprüche, wobei während eines Melkzyklus:
zumindest einmal die Vakuumpumpe aktiviert wird;
danach Flüssigkeit aus einem Speicherbehältnis in den Behälter gesaugt wird, während das Sperrventil (7) in der Saugleitung (5) offen, das Sperrventil (8) in dem Ablaßkanal (2) geschlossen und die Vakuumpumpe in Betrieb ist;
danach das Sperrventil (7) in der Saugleitung (5) geschlossen wird, wenn die in den Behälter gesaugte Flüssigkeit einen bestimmten Pegel erreicht hat, und geschlossen bleibt, bis die Vakuumquelle deaktiviert worden ist; und
wobei während eines Reinigungszyklus die Flüssigkeit, die während des Melkzyklus in den Behälter gesaugt worden ist, durch Öffnen des Sperrventils (8) in den Ablaßkanal (2) geliefert wird.

9. Verwendung nach Anspruch 8, dadurch gekennzeichnet, daß die gelieferte Flüssigkeit ein mit Wasser gemischtes Reinigungsmittel ist, wobei mit der erzeugten Mischung flüssigkeitsführende Kanäle der Anlage gereinigt werden.

## Revendications

1. Installation de traite équipée d'un dispositif de nettoyage automatique, comprenant un appareil destiné à distribuer un volume déterminé de liquide, l'appareil comprenant :
un réservoir (1) destiné à recevoir la quantité de liquide à distribuer,
un canal (2) de distribution qui se raccorde au réservoir (1) pour la distribution du liquide provenant du réservoir (1),
une pompe à vide,
un canal d'alimentation (3),
un trou d'air (4),
un conduit d'aspiration (5) raccordé à la pompe à vide,
un flotteur (6),
une soupape d'arrêt (7) commandée par le flotteur (6) et destinée à interrompre l'aspiration par le conduit d'aspiration (5), la soupape d'arrêt (7), dans une position inférieure, laissant ouvert le conduit d'aspiration (5) et, dans une position supérieure, fermant le conduit d'aspiration (5), alors que le flotteur (6) et la soupape d'arrêt (7) sont mobiles le long de trajets qui coïncident au moins partiellement, et
une soupape d'arrêt (8) placée dans le canal de distribution (2),
le canal d'alimentation (3), le trou d'air (4) et le conduit d'aspiration (5) communiquant chacun-avec le réservoir à un niveau supérieur à celui du canal de distribution (2),
caractérisée en ce que
la soupape d'arrêt (7) destinée à interrompre l'aspiration dans le conduit d'aspiration (5) est réalisée afin qu'elle garde une position dans laquelle elle ferme le conduit d'aspiration (5) sous l'action d'un vide créé dans le conduit d'aspiration (5) pendant le fonctionnement, et en ce que
le conduit d'aspiration (5) est en communication libre avec la source de vide, si bien qu'une pression réduite dans le conduit d'aspiration (5) apparaît lorsque la pompe à vide est activée pour la création d'un vide ailleurs.

2. Installation selon la revendication 1, caractérisée en ce que le détecteur (6) du niveau de liquide est destiné à arrêter l'aspiration dans le conduit d'aspiration (5) lorsque le liquide dans le réservoir atteint un niveau (10) qui se trouve au-dessus du niveau (18) auquel le canal d'alimentation (3) communique avec le réservoir.

3. Installation selon la revendication 1 ou 2, caractérisée en ce que le canal d'alimentation (3) aboutit dans le réservoir (1) par un conduit (19) qui dépasse vers le haut dans le réservoir (1).

4. Installation selon la revendication 3, caractérisée en ce que la distance dont dépasse le conduit (19) dans le réservoir (1) est réglable.

5. Installation selon l'une quelconque des revendications précédentes, caractérisée en ce que le trou d'air (4) a une section limitée.

6. Installation selon l'une quelconque des revendications précédentes, caractérisée en ce que le réservoir (1) possède une cuvette (25) et un couvercle (26), le couvercle (26) étant réalisé sous forme d'un adaptateur raccordé à une monture du dispositif de nettoyage automatique.

7. Installation selon l'une quelconque des revendications précédentes, caractérisée en ce qu'un détecteur est monté dans le réservoir (1) afin qu'il signale si une quantité déterminée de liquide est présente dans le réservoir.

8. Application d'une installation selon l'une quelconque des revendications précédentes, dans laquelle, au cours d'un cycle de traite,
la pompe à vide est activée au moins une fois,
ensuite, du liquide est aspiré à partir d'un récipient de stockage dans le réservoir alors que la soupape d'arrêt (7) du conduit d'aspiration (5) est ouverte, la soupape d'arrêt (8) du canal de distribution (2) est fermée et la pompe à vide est en fonctionnement,
ensuite, la soupape d'arrêt (7) placée dans le conduit d'aspiration (5) est fermée lorsque le liquide aspiré dans le réservoir atteint un niveau déterminé et reste fermée jusqu'à ce que la source de vide ait été désactivée, et
dans laquelle, pendant un cycle de nettoyage, le liquide aspiré dans le réservoir pendant le cycle de traite est distribué par ouverture de la soupape d'arrêt (8) placée dans le canal de distribution (2).

9. Application selon la revendication 8, caractérisée en ce que le liquide distribué est un agent de nettoyage qui est mélangé à de l'eau et les canaux de transport de liquide de l'installation sont nettoyés par le mélange résultant.
